# EUROPÄISCHE PATENTANMELDUNG

(11) **EP 1 852 715 A1**
(43) Veröffentlichungstag der Anmeldung: **07.11.2007**
(21) Anmeldenummer: 07107216.9
(22) Anmeldetag: 30.04.2007
(51) Int. Cl.: G01T 1/178, G01T 7/06

(54) **Vorrichtung und Verfahren zur automatischen und kontinuierlichen Messung der Alpha-, Beta- und Gamma-Strahlung von natürlichen und künstlichen radioaktiven Aerosolen**

(30) Priorität: 03.05.2006 AT 7562006
(71) Anmelder: Bitt, Helmut, 2104 Spillern (AT)
(72) Erfinder: Bitt, Helmut, 2104 Spillern (AT)
(74) Vertreter: Pinter, Rudolf

(57) **Zusammenfassung**

Vorrichtung und Verfahren zur automatischen und kontinuierlichen Messung der Alpha-, Beta- und Gamma-Strahlung radioaktiver Aerosole mittels elektrostatischer Aufladung, Abscheidung dieser auf einem Träger, Messung der Aktivitäten mit zwei gasgefüllten Fenster-Proportionalzählrohren und nachfolgender Auswertung der Messdaten. Die Vorrichtung kann mit weiteren Messeinrichtungen für Strahlenspektrometrie, Neutronendetektion und Wetterdaten kombiniert werden.

## Beschreibung

Die ständige Überwachung der Radioaktivität der Luft, sei sie durch natürliche Gegebenheiten oder durch menschliche Tätigkeiten bewirkt, gewinnt immer mehr an nationaler und internationaler Bedeutung; vor allem im Zusammenhang mit gesundheitlichen bzw. medizinischen Maßnahmen im Rahmen der Strahlenmedizin.

Es ist daher z.B. für Staaten, Staatengemeinschaften, die Industrie, Energieerzeuger und medizinische Einrichtungen wichtig, Änderungen der Radioaktivität der Luft sofort feststellen zu können, um entsprechende Maßnahmen, wenn die gemessene Radioaktivität vorgesehene Grenzwerte überschreitet, ergreifen zu können. Die Vorrichtung kann beispielsweise transportabel im Freien, im Laborbereich, bei Wasserwerken oder Kemenergieanlagen zum Einsatz gelangen.

Die Erfindung betrifft eine Vorrichtung und ein Verfahren zur automatischen und kontinuierlichen Messung der Alpha-, Beta- und Gamma-Strahlung radioaktiver Aerosole mittels elektrostatischer Aufladung, Abscheidung dieser auf einem Träger, Messung der Aktivitäten mit zwei gasgefüllten Fensterproportionalzählrohren und nachfolgender Auswertung der Messdaten. Die Vorrichtung kann mit weiteren Messeinrichtungen für Strahlenspektrometrie, Neutronendetektion und Wetterdaten kombiniert werden.

Herkömmliche Methoden saugen über geeignete Filter Luft an und deponieren die Aerosole auf einem Filter. Das kann dazu führen, dass vor allem durch Selbstabsorption sich die Zahl der α-Teilchen stark verringert und somit die Effizienz der Messausbeute sehr gering ist. Die Messung der α-, β-, γ-Strahlung kann mit verschiedenen Detektoren, wie zum Beispiel Halbleiter-, Szintillations-, oder reinst Germaniumdetektoren durchgeführt werden. Die Geräte sind in der Regel in Räumlichkeiten oder sogar in solchen mit einer Klimaanlage untergebracht. Um ein vollautomatisches und kontinuierliches Arbeiten des Gerätes zu gewährleisten, ist dafür zu sorgen, dass es rechtzeitig zu einem Filterwechsel kommt. Das geschieht entweder durch Vorschub eines Filterbandes oder durch Wechsel von Einzelfiltern mittels eines Manipulators in der Messvorrichtung, bzw, durch Aufsichtspersonal.

Die JP11064529A (Aloka) zeigt einen "Dust Monitor" zur Messung künstlicher Nuklide mit einem herkömmlichen Aerosolbandfilter-Messaufbau bei dem die Abscheidung der Aerosole mittels einer Pumpe an Filterpapier erfolgt, wobei das Papierfilterband in der Messanordnung über eine Auf- und Abwickelrolle durchgespult wird. Die Bewegung des Filterbandes erfolgt dabei kontinuierlich. Als Detektoren dienen ZnS-Plastik-Szintillatoren in Sandwichbauweise, NaI-Szintillatoren und Halbleiterdetektoren.

In der GB1060880A (Institut National de Recherche Chimique Appliquee) wird ebenfalls ein Filterband von Rollen ab- und aufgespult, kontinuierlich oder schrittweise bewegt und mit Aerosolen beladen. In einer Messanordnung wird unterhalb des Filters eine radioaktive Quelle angeordnet und die Abschwächung der Strahlungsintensität durch Filter und Aerosol wird mit einem Geiger Zählrohr ermittelt.

Die FR2758396A1 (MGP Instruments Societe Anonyme) zeigt eine Messanordnung zur Bestimmung der Betastrahlungsaktivität eines mit Aerosolen beladenen porösen Bandes mittels Detektordioden. Auch dieses Band wird über Rollen durch die Messanordnung durchgespult.

Die US5489775A (D.D. Viena) betrifft eine Kalibrieranordnung für ein mit radioaktiven Aerosolen beladenes, über Ab- und Aufwickelrollen, bewegtes Filterband mittels verschiedenen radioaktiven Eichquellen und deren Messung mit Halbleiterdetektoren.

Die US6346709B1 (S.Kronenberg et al.) zeigt einen tortenförmigen Strahlungsdetektor mit diversen Eintrittsfenstern für unterschiedliche Strahlungsarten. Ein rundes mit Aerosolen beladenes Filterpapier wird auf diese Fenster zur Detektion der radioaktiven Strahlenarten gelegt.

Die genannten Druckschriften zeigen beispielhaft den bekannten Stand der Technik zur Messung der Alpha, Beta und Gamma Aktivität von Aerosolen, wobei die Anschaffungs-und Betriebskosten teilweise beträchtlich sind; aber auch die klimatisch bedingten Voraussetzungen am Aufstellungsort, machen eine flächendeckende Ausstattung in ähnlicher Weise wie es bei der Erfassung der γ-Umweltaktivität üblich ist, nicht so leicht möglich.

Bei der Beurteilung einer Umweltverstrahlung, besonders bei Frühwarnsystemen, ist neben der γ-Strahlung auch die Überprüfung der bodennahen Atmosphäre, also der Luft die von Menschen eingeatmet wird, insbesondere die α- und β-Strahlungsaktivität äußerst wichtig.

In vielen Fällen besteht eine gewisse Notwendigkeit zu wissen, um welche radioaktiven Isotope es sich im Aerosol handelt um deren Gefährlichkeit festlegen zu können.

Die Erfindung ermöglicht auf einfache und kostengünstige Weise, ohne großen Personalaufwand, diese Strahlenschutzaufgabe, nämlich der kontinuierlichen und automatischen Messung aller drei Strahlenarten (Alpha, Beta und Gamma) zu erfüllen. Beim Anmeldegegenstand wird die angesaugte Luft ionisiert und ein Teil des angesaugten Staubes auf einer handelsüblichen Aluminiumfolie abgeschieden. Zwei Fensterproportionalzählrohre messen ober- und unterhalb der Folie die verschiedenen Strahlungsarten. [Ein Fensterproportionalzählrohr der verwendeten Art ist aus der Dissertation des Wolfgang Egger 1978 an der TU-Wien mit dem Titel "Untersuchung der Parameter bei der Messung flächenförmiger Aktivitäten mittels ortsempfindlicher Zählsysteme" zur Auswertung von Chromatogrammen bekannt] Die Aluminiumfolie wird schrittweise weiterbewegt und eine neue Beaufschlagung mit Aerosolstaub wird nach einer vorgegebenen Zeit gemessen. Die Messungen der einzelnen Strahlungsarten wird automatisch ausgewertet, gespeichert und im Falle des Überschreitens eines Grenzwertes wird ein Alarm ausgelöst. Die Vorrichtung und Auswerteeinheit ist erweiterbar für andere Messeinrichtungen, wie z.B. einen Neutronendetektor und spektroskopische Analysen der Strahlungsarten. Die gesamte Messvorrichtung ist vorzugsweise in einem abgeschirmten Behälter mit abnehmbarem Deckel angeordnet. Die Vorrichtung kann stationär in Gebäuden, transportablen Containern, Messfahrzeugen oder im Freien untergebracht, bzw. aufgestellt werden. Die kontinuierliche Messung im Freien im Temperaturbereich von -20° C bis + 50° C unter allen Witterungsbedingungen ist gewährleistet. Die Stromversorgung über Netzspeisung, Akkus, Sonnenkollektoren und externe Stromerzeuger macht das Gerät standortunabhängig.

Je nach Aufgabenstellung (z.B. wegen örtlichen Gegebenheiten) ist es möglich diverse Erweiterungen entweder an der beschriebenen Messvorrichtung oder am Zentralrechner selber anzuschließen. In solch einer erweiterten Ausführung werden zusätzlich verschiedene spezielle Detektoren wie z.B. ein Neutronendetektor, eine Wetterdatenmesswarte oder eine spektroskopische Auswertung mit der Vorrichtung kombiniert.

### Figurenbeschreibung

Fig. 1 zeigt ein Fensterproportionalzählrohr mit Stützsteg
Fig. 2 zeigt einen Querschnitt durch die Vorrichtung in der Besaugungs-/Gamma-Messphase
Fig. 3 zeigt einen Querschnitt durch die Vorrichtung in der Alpha, Beta+Gamma-Messphase
Fig. 4 zeigt den Funktionsschaltplan der Vorrichtung zur Messung der Strahlenarten
Fig. 5 zeigt die Ausführung mit zugeschalteter spektroskopischer Aufbereitung, einem Detektor und einer Wetterdatenmesswarte

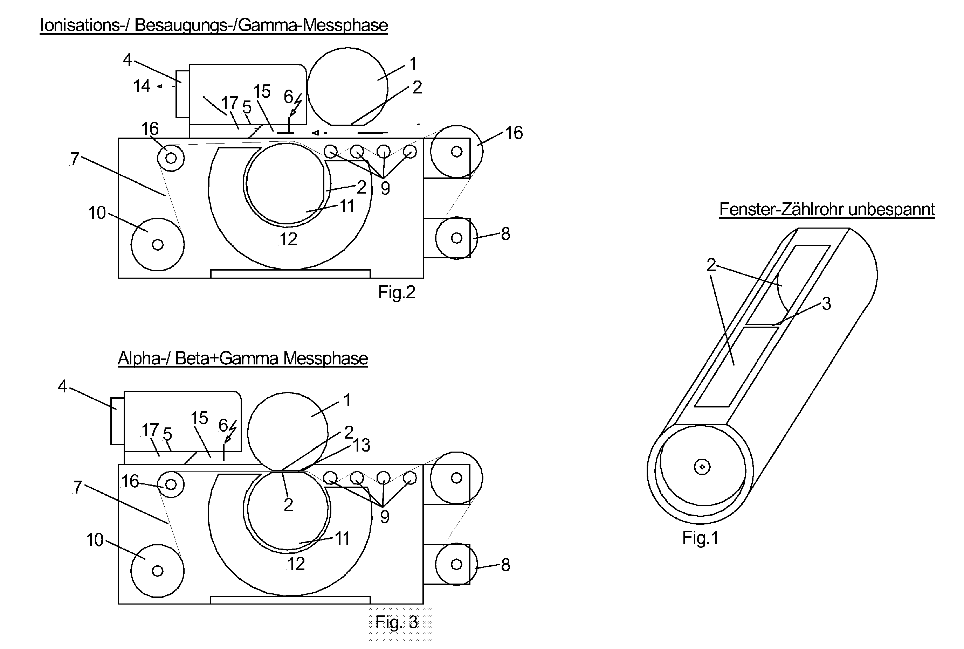

Die Messung der radioaktiven Aerosole erfolgt mit zwei zylindrischen Fensterproportionalzählrohren (Fig.1), wobei die Fenster (**2**) in Längsrichtung der Zählrohre angeordnet sind. Die Fenster werden durch dünne Folien mit einem Flächengewicht von 0,2mg/cm² (Mylarfolien) abgedeckt. Zur Konstanthaltung der Flächenausrichtung der Fensterfolie besitzen die Proportionalzählrohre in der Fenstermitte einen dünnen Stützsteg **(3);** und die Zählrohre sind mit einem Zählgasbehälter über ein regelbares Druckventil verbunden. Die Steuerung des Druckventils sorgt für einen Druckausgleich zwischen dem Umgebungs- und Innendruck der Zählrohre, sodass die Folie immer gleich gespannt ist und dadurch eine gleich bleibende Messgeometrie gewährleistet ist.

Mittels eines Ventilators **(4)** wird Luft durch einen verschiebbaren Kanal **(5)** angesaugt (Fig.2). In diesem Kanal (5) wird die angesaugte Luft durch einen Hochspannungsgenerator **(6)** ionisiert. Der Kanal (5) bildet somit eine konstante Ionisationsstrecke. Durch den regelbaren Ionisationsstrom des Hachspannungsgenerators (6) ist die Ionisation der Luft und damit die Abscheidung der Aerosole weitgehend unabhängig von Witterungsbedingungen, wie Temperatur, Luftfeuchtigkeit und Luftdruck des Aufstellungsortes. Im Verlauf des Kanals (5) wird das geladene Aerosol auf einer geerdeten handelsüblichen Alufolie (**7**) abgeschieden. Der Messort der Vorrichtung ist durch einen definierten Messplatz (15) für das abgeschiedene Aerosol (13) auf der Alufolie vorgegeben.
Die zu messende, mit dem Aerosol behaftete, Luft **(14)** durchströmt den Kanal **(5).** Ventilator **(4),** Kanal **(5)** und Ionisationsstrecke bilden einen Luftkasten **(17).** In der anmeldegemäßen Vorrichtung wird eine Alufolie von einer Abwickelrolle **(8)** über Umlenkrollen (16) und verschiedene Spannrollen **(9)** zur Messanordung der beiden Fensterproportionalzählrohre (1,11) geführt. Für jede Einzelmessung ist die gleiche Messgeometrie dadurch gewährleistet, dass die Alufolie immer vollkommen eben, durch Spannrollen (9), gespannt wird. Die Alufolie wird dann weiters zu einer Aufwickelrolle (**10**), zur Aufnahme der bereits gemessenen und somit verbrauchten Alufolie, geführt. Die Aufwickelrolle **(10)** ist mit einem steuerbaren Antrieb für den Folienvorschub, z.B. einem Schrittmotor, verbunden und bildet eine Folienvorschubeinrichtung.

Im Messort der Vorrichtung befinden sich die beiden Fensterzählrohre **(1,11).** Das sich unterhalb der Alufolie befindliche zweite Fensterproportionalzählrohr **(11)** befindet sich in einer starken Bleiabschirmung (**12**) zur Unterdrückung der Gamma-Umgebungsstrahlung. Diese Bleiabschirmung lässt im oberen Bereich unterhalb der Alufolie eine Eintrittsöffnung zur Messung der Strahlung frei. Dieses zweite Fensterzählrohr (11) ist um seine Längsachse drehbar gelagert. In der Besaugungs- bzw. Bestaubungsphase ist das sich oberhalb der Alufolie befindliche erste Fensterproportionalzählrohr **(1)** angehoben und das Fenster des sich unterhalb der Alufolie befindlichen zweiten Fensterproportionalzählrohres **(11)** ist in die Bleiabschirmung **(12)** hineingedreht, wobei die aus den Aerosolen auf der Alufolie stammende Gammastrahlung (Gamma 1-Messphase) durch das untere zweite Zählrohr (11) gemessen wird, Die Materialstärke, bzw. Wandstärke des zweiten Zählrohres (**11**) ist ausreichend um eine etwaige Beta-Strahlung aus dem Messplatz (15) abzuschirmen. Das untere zweite Fensterproportionalzählrohr **(11)** wirkt dabei wie ein herkömmliches Proportionalzählrohr ohne Fenster.

Nach erfolgter Besaugung und Bestaubung (Fig.3) wird der Kanal (**5**) weg geschoben, dass sich oberhalb der Alufolie befindliche erste Fensterproportionalzählrohr (**1**) wird über den zu messenden Alufolienteil mit dem abgeschiedenen Aerosol **(13)** -Messplatz (15) - bewegt und dass sich unterhalb der Alufolie befindliche zweite Fensterproportionalzählrohr (**11**) wird so gedreht, dass sein Fenster unter dem zu messenden Alufolienteil - Messplatz (15) - zu liegen kommt. In dieser Messphase (Alpha, Beta+Gamma 2 - Messphase) messen diese beiden Fensterproportionalzählrohre **(1,11)** die in sie eindringende Strahlung.

Die Messung der Beta und Gamma Aktivität erfolgt mit dem sich unterhalb der Alufolie befindlichen zweiten Fensterproportionalzählrohr (**11**). Die Messung der Alpha Aktivität erfolgt mit dem sich nun oberhalb der Alufolie befindlichen ersten Fensterproportionalzählrohr (**1**). Die Alpha Aktivität erfährt dort, durch die erfindungsgemäße Messanordnung, keine Abschwächung durch Selbstabsorption. Das Verhältnis zwischen α-, β- und γ- Strahlen ist jeweils konstant, solange keine künstlichen Nuklide vorhanden sind.

Die staubbelegte Alufolie (**13**) wird schrittweise weitergedreht, sodass nach einer vorgegebenen einstellbaren Zeitspanne eine neue Beaufschlagung der Alufolie auf einem unbestaubten Teil erfolgen kann.

Die beiden Fensterproportionalzählrohre **(1,11)** sind mit einem regelbaren Zählrohr-Hochspannungsgenerator und einer die Zählrohrimpulse bzw. den Zählrohrstrom messenden und auswertenden Messelektronik verbunden. Die Messelektronik, die Zählgasdrucksteuerung, die Vorschubsteuerung und die Bewegungssteuerungen für den Ventilator (4), Kanal (5) und die beiden Fensterzählrohre (1,11) usw. sind mit einer zentralen Steuer- und Regelungseinrichtung verbunden. Diese zentrale Steuer- und Regelungseinrichtung kann z.B. ein fest eingebauter Steuerungsrechner, ein zuschaltbarer Computer, z.B. Laptop, oder ein sich an einem anderen Ort befindlicher, z.B. in einer Messzentrale angeordneter Rechner sein. Die Messdaten können daher entweder vor Ort gespeichert und ausgedruckt werden, oder z.B. durch Funk- oder Leitungsübertragung zu so genannten Messzentralen übermittelt werden. Letzteres hat den Vorteil dass damit eine Neuprogrammierung der Messaufgaben von außerhalb des Messplatzes möglich ist. Für exponierte Standorte ist eine Satellitenübertragung der Messdaten vorgesehen.

Der Messvorgang folgt dem nachstehenden Messablaufschema:
1. Initialisierung
   Die Vorrichtung begibt sich in die Anfangsposition
   Das erste Zählrohr (1) ist angehoben
   Das Fenster des zweiten Zählrohres (11) ist in die Bleiabschirmung gedreht
   Der verschiebbare Kanal (5) ist in Ionisationsposition
2. Background Messungen
   Das erste Zählrohr (1) misst die Alpha-Hintergrundstrahlung
   Das zweite Zählrohr (11) misst die Gamma-Hintergrundstrahlung
3. Ionisationsphase
   Hochspannung ist eingeschaltet
   Ventilator (4) ist eingeschaltet
   Die Alufolie (7) wurde in Bestaubungsposition bewegt
   Den beiden Zählrohren (1,11) wird bei Unterdruck Zählgas zugeführt
4. Messphase
   Die Hochspannung und der Ventilator (4) werden abgeschaltet
   Der verschiebbare Kanal (5) ist weg geschoben
   Das erste Zählrohr (1) ist zur Folie abgesenkt
   Das Fenster des zweiten Zählrohres (11) ist zur Folie hin ausgerichtet
   Beide Zählrohre (1,11) messen die in sie eindringenden Strahlungsarten
5. Auswertung, Speicherung und Übermittlung der Messdaten
   Die Vorrichtungsmessdatenauswertung ist so konzipiert, dass bei Überschreiten eines oder mehrerer vorgegebener Strahlungspegel, für die einzelnen Strahlungsarten, Alarme ausgegeben werden. Das Messablaufschema wechselt in einstellbaren Zeitabschnitten automatisch.

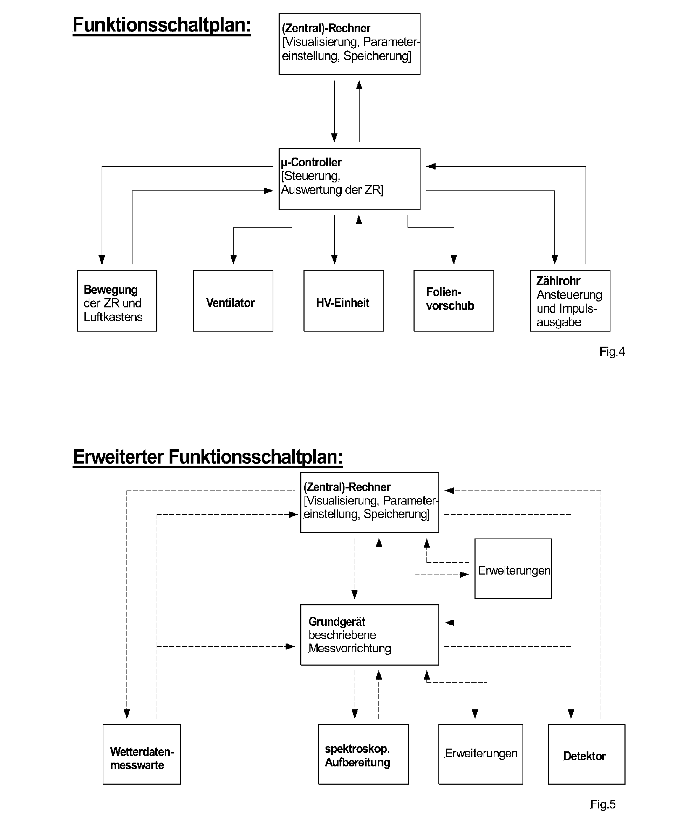

Die Fig.4 zeigt eine bevorzugte Ausbildung zur Steuerung und Auswertung der Messdaten der anmeldegemäßen Vorrichtung, wobei zur Visualisierung, Parametereinstellung und Speicherung der Messdaten ein Zentralrechner eingesetzt (Fig. 4 und 5) wird, welcher Daten von einer µController-Karte empfängt und auch Daten an die µController-Karte sendet. Die µController-Karte ist gleichzeitig Ansteuerung und Auswerteeinheit der Vorrichtung. Sie gibt den Steuerbefehl zur Bewegung des Kanals (5) bzw. des Luftkastens (17). Weiters wird der Ventilator (4) je nach Messphase ein- oder ausgeschaltet. Die µController-Karte steuert weiters die HV-Einheit, welche den Hochspannungsgenerator (6) enthält, und erhält Rückmeldungen über den Ausgangsstrom und die Ausgangsspannung der HV-Einheit. Der Vorschub der Folie wird ebenfalls durch die µController-Karte gesteuert. Die Ansteuerung der Zählrohre (z.B. die Hochspannung), als auch die Auswertung der von den Zählrohren gelieferten Impulse wird von der µController-Karte übernommen. Die so ermittelten Messwerte werden an den Zentralrechner übergeben.

Eine spektrometrische Auswertung der Alpha- und Beta Strahlung (Fig.5) kann über an sich bekannte Verfahren der Impulsformdiskriminierung, der Impulshöhe usw. erfolgen.In einer bevorzugten Ausbildung der Erfindung werden dafür MultiChannelAnalyser Karten, sog. MCA-Karten (bestimmte Spannung entspricht bestimmten Kanälen), zur strahlungsspektroskopischen Aufbereitung, mit der Messelektronik verbunden. Eine automatische Auswertung der gemessenen spektrometrischen Daten ermöglicht eine erste Bestimmung auf bestimmte radioaktive Isotope im Aerosol.

In einer bevorzugten weiteren Ausbildung der Erfindung (Fig.5) werden verschiedene Erweiterungen mit dem Zentralrechner und der bisher beschriebenen Vorrichtung verbunden. So wird ein handelsüblicher Neutronendetektor mit der Messelektronik verbunden. Für diese Strahlenschutzaufgabe gibt es verschiedene Detektoren wie Longcounter oder einen direkten Nachweis durch Streuung an Wasserstoffkernen und Registrierung des von den Rückstoßprotonen erzeugten Signals in einer Ionisationskammer, einem Proportionalzähler oder einem Szintilationszähler. Diese Detektoren sprechen auch auf Gammastrahlung an, die in schnellen Neutronenfeldern meist vorhanden ist; organische Flüssigszintillatoren erlauben es dabei, den Gammauntergrund durch eine Impulsform-Diskriminierung von den Neutronen zu unterscheiden.

In einer weiteren Ausbildung der Erfindung wird eine Wetterdatenmesswarte (Fig.5) zur Erfassung von Temperatur, Luftdruck, Regen, Windstärke und Windrichtung mit der Messelektronik verbunden.

Die Messdaten der Spektrometer, der Wetterwarte und des Neutronendetektors werden, zeitlich korreliert mit der Strahlungsmessung, erfasst, gespeichert und übermittelt.

## Patentansprüche

1. Vorrichtung zur automatischen und kontinuierlichen Messung der Alpha-, Beta- und Gamma-Strahlung von natürlichen und künstlichen radioaktiven Aerosolen mit zylindrischen Proportionalzählrohren, welche in Längsrichtung der Proportionalzählrohre ein Fenster, welches mit einer Folie, vorzugsweise einer Mylarfolie, abgedeckt ist, aufweisen, **dadurch gekennzeichnet, dass** oberhalb eines mit einer Aluminiumfolie versehenen Messortes ein verschiebbarer Kanal (5), vorzugsweise im rechten Winkel zu den Proportionalzählrohren (1,11) bewegbar, angeordnet ist, wobei im Kanal (5) ein regelbarer Ventilator (4) und eine regelbare lonisationseinrichtung (6) angeordnet sind, die eine konstante Ionisationsstrecke bilden, eine regelbare Aluminiumfolien Auf- und Abwickeleinrichtung (8, 10) zur Regelung eines Folienvorschubes, ein definierter Messplatz (15) für auf der Aluminiumfolie (7) elektrostatisch abzuscheidende Aerosole am Messort, eine hohle zylindrische, mit einer Eintrittsöffnung versehenen Bleiabschirmung (12) unterhalb des definierten Messplatzes (15), mit zwei beweglich gelagerten Fensterproportionalzählrohren (1, 11), welche über ein steuerbares Druckregelventil mit einem Zählgasbehälter verbunden sind, vorgesehen sind, wobei ein erstes Fensterproportionalzählrohr (1) oberhalb der Aluminiumfolie verschiebbar und absenkbar angeordnet ist und ein zweites Fensterproportionalzählrohr (11) in der hohlen Bleiabschirmung (12) unterhalb der Aluminiumfolie um seine Längsachse drehbar gelagert ist, weiters eine elektronische Steuerung, welche mit dem verschiebbaren Kanal (5), dem Ventilator (4), der Ionisationseinrichtung (6), einer Folienvorschubeinrichtung (10), dem Druckregelventil und den Ansteuerungseinrichtungen der Fensterproportionalzählrohre (1,11) verbunden ist, angeordnet ist, wobei die Ansteuerungseinrichtungen weiters die Impulsausgabe der Fensterproportionalzählrohre (1, 11) an die elektronische Steuerung durchführen und ein mit der elektronischen Steuerung verbundenen Zentralrechner vorgesehen ist..

2. Vorrichtung nach Anspruch 1, **dadurch gekennzeichnet, dass** der Zentralrechner mit einem Detektor und/oder MCA-Karten zur alpha- und/oder gammaspektroskopischen Aufbereitung und einer Wetterdatenmessanordnung zur vorzugsweisen Messung von Temperatur, Luftdruck, Regen, Windstärke und Windrichtung usw. verbunden ist.

3. Vorrichtung nach den Ansprüchen 1 und 2, **dadurch gekennzeichnet, dass** die regelbare Ionisationseinrichtung (6) ein regelbarer Hochspannungsgenerator ist.

4. Vorrichtung nach den Ansprüchen 1 bis 3, **dadurch gekennzeichnet, dass** in den Fenstern der Proportionalzählrohre (1,11) dünne Stützstege (3), vorzugsweise zumindest in der Fenstermitte, zur Aufrechterhaltung einer konstanten Fensterfolienspannung, angeordnet sind.

5. Vorrichtung nach den Ansprüchen 1 bis 4, **dadurch gekennzeichnet, dass** über das Druckregelventil der Druck des Zählgases in den Fensterproportionalzählrohren (1,11) die Fensterfolie konstant spannt.

6. Vorrichtung nach den Ansprüchen 1 bis 5, **dadurch gekennzeichnet, dass** die Folienvorschubeinrichtung mit einem regelbaren Motor verbunden ist und dass zur konstanten Folienspannung des definierten Messplatzes (15) die Folienvorschubeinrichtung neben den Auf- und Abwickeleinrichtungen mehrere Spann- (9) und Umlenkrollen (16) aufweist.

7. Vorrichtung nach den Ansprüchen 1 bis 6, **dadurch gekennzeichnet, dass** die Vorrichtung mit unterschiedlichen Stromversorgungsquellen, wie Netzstrom, Sonnenkollektoren, Stromaggregaten usw. verbunden und betrieben werden kann.

8. Vorrichtung nach den Ansprüchen 1 bis 7, **dadurch gekennzeichnet, dass** die Vorrichtung in einem abgeschirmten Gehäuse mit einem zu öffnenden Deckel angeordnet ist.

9. Vorrichtung nach den Ansprüchen 1 bis 8, **dadurch gekennzeichnet, dass** die Vorrichtung, bzw. die Vorrichtung mit dem Gehäuse transportabel ausgeführt ist.

10. Vorrichtung nach Anspruch 1 bis 9, dass der Zentralrechner mit einem Datenspeicher, einem Messdatenauswertecomputer, einem Drucker, einer Alarmeinrichtung und einer Sende- und Empfangseinrichtung für Funk- und Datenleitungen, vorzugsweise Satellitenfunk, verbunden ist.

11. Verfahren zur automatischen und kontinuierlichen Messung der Alpha-, Beta- und Gamma-Strahlung von natürlichen und künstlichen radioaktiven Aerosolen mit der Vorrichtung nach den Ansprüchen 1 bis 10, **dadurch gekennzeichnet, dass** sich die Vorrichtung zuerst in einer Anfangsposition befindet, in der das erste Fensterproportionalzählrohr (1) angehoben und verschoben vom Messort angeordnet ist, in der das zweite Fensterproportionalzählrohr (11) mit seinem Fenster in die Bleiabschirmung (12) gedreht ist, dass den beiden Zählrohren (1,11) Zählgas zugeführt wird und dass in diesen Stellungen der beiden Zählrohre (1,11) die Hintergrundstrahlung der einzelnen Strahlungsarten gemessen wird, in der Aerosol-Messphase anschließend die zu messende aerosolbehaftete Luft durch einen Ventilator (4) über einen verschiebbaren Kanal (5) angesaugt und im Kanal (5) durch eine regelbare Ionisationseinrichtung (6) ionisiert wird, wobei der Kanal (5) eine konstante Ionisationsstrecke bildet, dabei am Austrittsende des Kanals (5) das geladene Aerosol auf einer geerdeten Aluminiumfolie (7) auf einem vorgegebenen definierten Messplatz (15), innerhalb einer vorgegebenen Zeitspanne, elektrostatisch abgeschieden wird und nach Ende des Bestaubungsvorganges der Kanal (5) vom Messplatz weg geschoben wird und die beiden Fensterproportionalzählrohre (1,11) in ihre Messpositionen oberhalb und unterhalb der Aluminiumfolie gesenkt bzw. gedreht werden und anschließend der Messvorgang der Aerosole mittels der beiden Zählrohre (1,11) und der dazugehörigen Ansteuerungsvorrichtungen erfolgt, wobei über das erste Fensterproportionalzählrohr (1) die Alpha-Strahlung und über das zweite Fensterproportionalzählrohr (11) die Beta und Gammastrahlung gemessen wird, und nach Beendigung der Messung die bestaubte Aluminiumfolie (7), durch die Folienvorschubeinrichtung, von der Messplatzposition weg geschoben wird und dass die Messdaten der einzelnen Strahlungsarten in einem Zentralrechner nach vorgegebenen Programmen gespeichert, ausgewertet und bearbeitet werden und dass die ausgewerteten Messdaten bei Überschreiten vorgegebener Schwellwerte Alarme auslösen und dass der Zentralrechner über Funk oder Datenleitung z.B. Messergebnisse weiterleitet, und/oder Programmbefehle über Funk oder Datenleitung empfängt; und dass nach vorgegebenen Zeitspannen der gesamte Messvorgang ständig wiederholt wird.

12. Verfahren nach Anspruch 11, **dadurch gekennzeichnet, dass** Messdaten von zugeordneten weiteren Messanordnungen wie eines Neutronendetektors und/oder einer Wetterdatenmessanordnung im Zentralrechner zusammen mit den durch die erfindungsgemäße Vorrichtung ermittelten Messdaten der einzelnen Strahlungsarten ausgewertet, bearbeitet, korreliert und gespeichert werden.

13. Verfahren nach den Ansprüchen 11 und 12, **dadurch gekennzeichnet, dass** der Zentralrechner eine Alpha- und Gammaspektralanalyse aus den gemessenen Messdaten des Aerosols durchführt.

14. Verfahren nach den Ansprüchen 11 bis 13, **dadurch gekennzeichnet, dass** bei Feststellung eines Fehlers während des gesamten Messvorganges der Zentralrechner eine Fehlermeldung abgibt.
